# EUROPÄISCHE PATENTSCHRIFT

(11) **EP 1 052 163 B1**
(45) Veröffentlichungstag und Bekanntmachung des Hinweises auf die Patenterteilung: **23.07.2003**
(21) Anmeldenummer: 00109774.0
(22) Anmeldetag: 09.05.2000
(51) Int. Cl.: B62D 61/00, B60B 35/02, B62D 63/06, B62D 21/20

(54) **Anhänger mit einem selbsttragenden Aufbau aus Leichtmetall**
Trailer with a self-supporting body of light metal
Remorque avec une carrosserie autoportante d'un métal léger

(30) Priorität: 11.05.1999 DE 29908168 U
(43) Veröffentlichungstag der Anmeldung: 15.11.2000
(73) Patentinhaber: Westrick, Ludger, Dipl.-Ing., 46342 Velen-Ramsdorf (DE)
(72) Erfinder: Westrick, Ludger, Dipl.-Ing., 46342 Velen-Ramsdorf (DE)
(74) Vertreter: Linnemann, Winfried

(56) Entgegenhaltungen:
- GB-A- 773 946
- US-A- 4 482 589

## Beschreibung

Die vorliegende Erfindung betrifft einen Anhänger mit einem aus einem Boden, vier Wänden und einem Dach bestehenden, selbsttragenden Aufbau aus Leichtmetall und mit zwei Achsen mit Rädern, wobei die Vorderachse eine Deichsel aufweist und mittels eines unter dem vorderen Teil des Aufbaus angeordneten Drehkranzes lenkbar ist.

Anhänger der vorstehend genannten Art und mit den im Oberbegriff des unabhängigen Anspruchs 1 angegebenen Merkmalen sind aus der Praxis des Fahrzeugbaus allgemein bekannt. Die Ausführung des Anhängers mit einem selbsttragenden Aufbau aus Leichtmetall bietet dabei den Vorteil eines geringen Leergewichts und einer platzsparenden Bauweise, so daß ein sehr gutes Verhältnis von Leergewicht zu Ladegewicht und von Fahrzeugabmessungen zu Ladevolumen erreicht wird. Ein Teil des beim Ladevolumen erreichbaren Vorteils geht aber dadurch wieder verloren, daß zur Übertragung der zwischen Vorderachse und Aufbau auftretenden Kräfte und um ausreichend Freiraum zwischen Rädern und Aufbau zu schaffen, zwischen der Unterseite des Bodens des Aufbaus und der Oberseite des Drehkranzes der Vorderachse stabile Quer- und teilweise auch Längsträger in Form von I-, C- und/oder Rechteck-Profilen etc. zwischengebaut werden müssen. Da die Anhängerhöhe durch die Straßenverkehrszulassungsordnung auf ein bestimmtes Maß begrenzt ist, geht die für die Anordnung der Profile benötigte Höhe bei der Laderaumhöhe verloren. Außerdem haben derartige Anhänger eine ungünstig hohe Schwerpunktlage, was die Fahrsicherheit insbesondere in Kurven beeinträchtigt.

Für die vorliegende Erfindung stellt sich deshalb die Aufgabe, einen Anhänger der eingangs genannten Art zu schaffen, der die aufgeführten Nachteile vermeidet und bei dem insbesondere bei vorgegebener Gesamthöhe ein möglichst hoher Laderaum erzielt wird, ohne daß die Stabilität des Aufbaus beeinträchtigt wird, und bei dem die Fahreigenschaften, insbesondere bei Kurvenfahrt, sicher sind.

Die Lösung dieser Aufgabe gelingt erfindungsgemäß durch einen Anhänger der eingangs genannten Art, der dadurch gekennzeichnet ist,
- daß der vordere Teil des Bodens durch eine dünne tragende Bodenplatte gebildet oder unterlegt ist, an deren Unterseite der obere Teil des Drehkranzes unmittelbar oder mittels einer Zwischenlage angebracht ist,
- daß die Bodenplatte an ihrer Vorderkante mit der vorderen Wand und an ihren zwei Seitenkanten mit dem vorderen Bereich der beiden Seitenwände verbunden ist,
- daß die Bodenplatte an ihrem hinter dem Bewegungsbereich der Vorderachse und der daran gelagerten Räder liegenden hinteren Bereich als Querträger oder mit einem Querträger ausgebildet ist,
- daß der Querträger keine tragende Funktion für die Hinterachse und/oder für den hinteren Bodenteil aufweist,
- daß der Querträger mit seinen Enden mit den beiden Seitenwänden verbunden ist und
- daß der Querträger im wesentlichen nur nach unten über die Bodenplatte vorragt.

Bei dem erfindungsgemäßen Anhänger wird eine niedrige Bauhöhe im Bereich der Verbindung des Drehkranzes mit dem Aufbau erreicht, so daß die hier gewonnene Höhe der Laderaumhöhe voll zugute kommt, ohne daß die Gesamthöhe des Anhängers vergrößert werden muß. Dabei werden die auftretenden Kräfte zwischen den Vorderrädern und dem Aufbau schadlos übertragen und aufgenommen, weil die Bodenplatte ausreichend eigenstabil ist, weil sie an drei Seiten unmittelbar mit den entsprechenden Wänden des Aufbaus verbunden ist und weil an der vierten, hinteren Seite der Bodenplatte ein Querprofil vorgesehen ist, das seinerseits an seinen Enden unmittelbar mit den Seitenwänden des Aufbaus verbunden ist. Aus Gewichtsgründen sollte dabei die Länge der Bodenplatte so klein wie möglich gehalten werden, zweckmäßig nur so lang, daß die Räder unabhängig von ihrem Lenkeinschlag gerade nicht mit dem Querprofil kollidieren können. Die Lenk- und Federungsbewegungen der Vorderräder werden dabei durch das Querprofil nicht behindert, so daß keine Einschränkungen bei der Funktion auftreten. Der Drehkranz kann unmittelbar oder unter Einfügung einer Zwischenlage mit der Unterseite der Bodenplatte verbunden sein. Durch diese niedrige Bauweise der Verbindung von Drehkranz und Aufbau wird eine vorteilhaft niedrige und damit günstige Schwerpunktlage des Anhängers erreicht, was dessen Fahrstabilität zugute kommt.

Aus Stabilitätsgründen besteht die Bodenplatte bevorzugt aus Stahl.

In ihrer einfachsten Ausführung ist die Bodenplatte eine einlagige Platte, deren Stärke entsprechend den statischen und dynamischen Anforderungen gewählt ist.

Alternativ kann die Bodenplatte eine zumindest in einem Teilbereich ihrer Flächenerstreckung mehrlagige Platte sein, was den Vorteil einer hohen Tragfähigkeit bei vermindertem Gewicht bietet.

Eine Weiterbildung der zuletzt erwähnten Ausführung der Bodenplatte sieht vor, daß die Bodenplatte in einem in Anhänger-Längsrichtung verlaufenden Mittelbereich zweilagig aus einer Ober- und einer Unterplatte gebildet ist, die in geringem Abstand voneinander verlaufen und über Rippen oder Stege miteinander verbunden sind, wobei die Breite des Mittelbereiches kleiner als der innere freie Abstand der Vorderräder ist und wobei die Bodenplatte in den Bereichen beiderseits des Mittelbereiches zweilagig mit kleinerer Gesamthöhe oder einlagig ist und oberseitig bündig mit der Oberseite des Mittelbereiches ausgeführt ist. In dem Bereich, in dem der Drehkranz angeordnet ist, ist die Bodenplatte besonders stabil; zugleich ist sie in den Bereichen, die bei Geradeausfahrt oder geringem Lenkeinschlag der Vorderräder über diesen liegen, dünner ausgeführt, so daß hier ein größerer Raum für Federungsbewegungen zur Verfügung steht.

Wie oben erwähnt, besteht die Bodenplatte bevorzugt aus Stahl; alternativ kann sie auch aus einem festigkeitsmäßig dem Stahl gleichgestellten oder besseren Werkstoff hergestellt sein.

Um noch zusätzliche Bewegungsfreiheit für Federungsbewegungen der Vorderräder zu schaffen, kann zusätzlich die Bodenplatte in den bei Geradeausfahrtstellung der Vorderachse über den Vorderrädern liegenden Bereichen jeweils mindestens einen Ausschnitt oder jeweils mindestens einen Bereich mit verminderter Plattenstärke aufweisen.

Weiter sieht die Erfindung vor, daß die Bodenplatte unterseitig in den von den Vorderrädern bei deren Lenkbewegungen nicht überstrichenen Bereichen einen oder mehrere konzentrisch zum Drehkranz angeordnete Verstärkungsringe und/oder einen oder mehrere Verstärkungsstreifen und/oder -profile aufweist. Auf diese Weise kann die Bodenplatte ausgesteift und verstärkt werden, ohne daß die Vorderräder in ihren Lenk- und Federungsbewegungen dadurch behindert werden.

Um die Bodenplatte ohne Funktionsbeeinträchtigung so leicht wie möglich zu halten, kann diese in ihren statisch geringer belasteten Flächenbereichen mit gewichtsmindernden Ausschnitten und/oder Lochungen versehen sein.

Weiter ist bei dem erfindungsgemäßen Anhänger vorgesehen, daß die Bodenplatte unterseitig entlang ihrer Längsmittelachse vor und/oder hinter dem Drehkranz mit (je) einer einen Kanal für Elektro- und Druckluftleitungen und sonstige Versorgungsleitungen bildenden länglich-flachen Schutzhaube ausgestattet ist. Durch die angegebene Anordnung der Schutzhaube stört diese die Lenk- und Federungsbewegungen der Vorderräder bei Geradeausfahrt und mäßigen Kurvenfahrten nicht; bei sehr starkem Deichseleinschlag von annähernd 90° gelangen zwar die Räder in den Bereich der Schutzhaube oder Schutzhauben, jedoch treten derart große Lenkeinschläge nur bei Rangierbewegungen auf, bei denen wegen der sehr geringen Geschwindigkeit praktisch keine Federungsbewegungen vorkommen. Gleichzeitig trägt die Schutzhaube oder tragen die Schutzhauben noch zu einer gewissen Erhöhung der statischen und dynamischen Tragfähigkeit der Bodenplatte bei, so daß hier zwei Funktionen gleichzeitig erreicht werden.

Zweckmäßig ist die Bodenplatte so angeordnet, daß ihre Oberseite mit der Oberseite des übrigen Bodens des Aufbaus fluchtet, so daß ein stufenfreier Laderaumboden erreicht wird.

Darüber hinaus ist vorgesehen, daß die Bodenplatte oberseitig auf ihrem im Aufbauinneren liegenden Flächenbereich mit einer dem vorgesehenen Verwendungszweck des Anhängers entsprechenden, z.B. rutschhemmenden oder glatten oder sonstigen geeigneten Oberfläche versehen oder ausgeführt ist. Der übrige Laderaumboden ist zweckmäßig mit der gleichen Obberfläche versehen oder ausgeführt, so daß ein einheitlicher Laderaumboden im Inneren des Aufbaus erreicht wird.

Die vorgenannte Oberfläche kann beispielsweise durch ein auf der Oberseite der Bodenplatte angebrachtes Blech mit einer entsprechend ausgeführten Oberseite gebildet sein.

Der nicht von der Bodenplatte gebildete Bereich des Bodens des Aufbaus besteht, wie bei bekanntene Aufbauten üblich, beispielsweise aus quer verlegten Profilen oder Blechen oder dergleichen.

Zur Bildung einer flüssigkeitsdichten Wanne kann zusätzlich ein auf den Boden aufgebrachte Blech an seinen vier Kanten, mit Ausnahme des Bereiches von Türöffnungen, nach oben abgekantet sein.

Ausführungsbeispiele der Erfindung werden im folgenden anhand einer Zeichnung erläutert. Die Figuren der Zeichnung zeigen:
- Figur 1: einen Anhänger in Seitenansicht in einer schematischen Darstellung, teils im Vertikalschnitt,
- Figur 2: eine Bodenplatte als Teil des Anhängers in Unteransicht in einer ersten Ausführung,
- Figur 3: die Bodenplatte in gleicher Darstellungsweise in einer zweiten Ausführung und
- Figur 4: die Bodenplatte in einer dritten Ausführung, ebenfalls in Unteransicht.

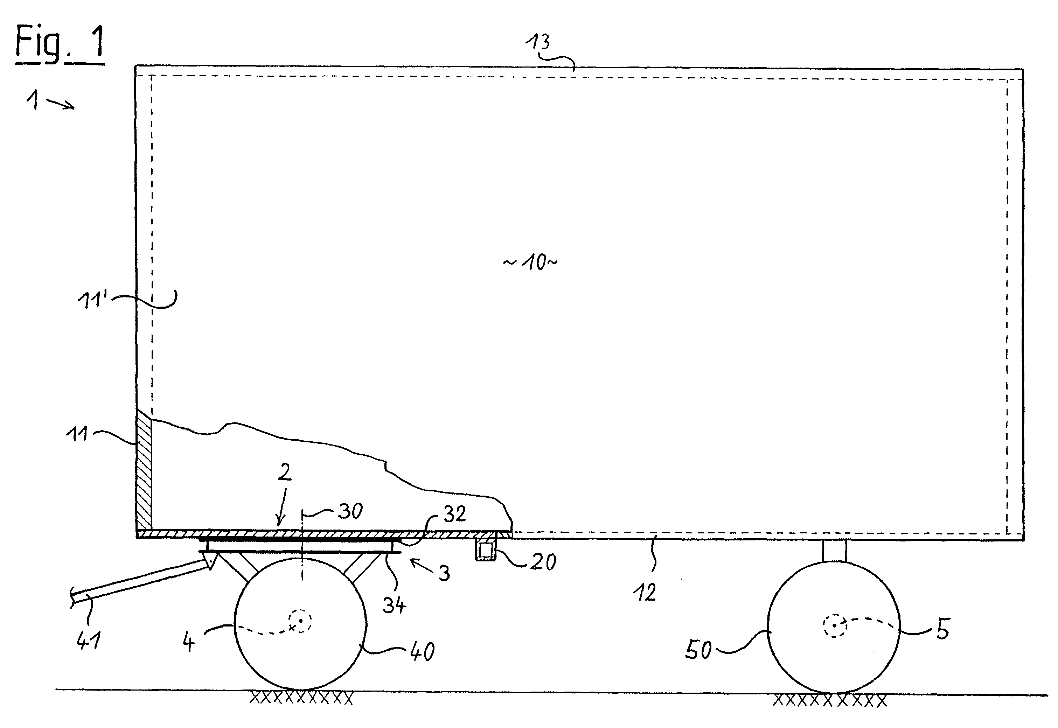

Das in der Figur 1 gezeigte Ausführungsbeispiel eines Anhängers 1 besitzt einen selbsttragenden Aufbau 10 aus Leichtmetall, der aus vier Wänden 11, 11', einem Boden 12 und einem Dach 13 gebildet ist. Außerdem umfaßt der Anhänger 1 eine Vorderachse 4 mit Vorderrädern 40 und eine Hinterachse 5 mit Hinterrädern 50. Die Vorderachse 4 ist mittels eines Drehkranzes 3 um eine vertikale Achse 30 schwenkbar. Über eine nur teilweise dargestellte Deichsel 41 ist der Anhänger 1 mit einem Zugfahrzeug kuppelbar.

Wie in dem weggebrochenen linken unteren Teil des Aufbaus 10 erkennbar ist, ist der Boden 12 im vorderen Teil des Anhängers 1 durch eine relativ dünne, aber tragende Metall-Bodenplatte 2 ersetzt, wobei die Bodenplatte 2 und der übrige Boden 12 oberseitig etwa fluchtend miteinander ausgerichtet sind. Die Bodenplatte 2 besitzt im Unterschied zum übrigen Boden 12 eine höhere Stabilität und Tragfähigkeit, um die auftretenden Kräfte zwischen Vorderachse 4 und Aufbau 10 schadlos aufnehmen und weiterleiten zu können. Die Bodenplatte 2 besteht vorzugsweise aus Stahl oder aus einem anderen, gleiche oder höhere Stabilitäts- und Festigkeitsansprüche erfüllenden Werkstoff.

Zur günstigen Weiterleitung von Kräften liegt die Oberseite der Bodenplatte 2 an ihrer Vorderkante unter der vorderen Wand 11 des Aufbaus 10. Die beiden seitlichen Kanten der Bodenplatte 2 liegen unter den seitlichen Wänden 11' des Aufbaus 10. Dort sind die Bodenplatte 2 und die Wände 11, 11' miteinander verbunden. Da sich die Bodenplatte 2 nach hinten nicht über die gesamte Länge sondern nur über weniger als die Hälfte der Länge des Anhängers erstreckt, ist am Ende der Bodenplatte 2 unter dieser ein Querprofil 20 angeordnet, hier in Form eines Rechteck-Hohlprofils. Dieses Querprofil 20 liegt mit seinen seitlichen Enden unterhalb der seitlichen Wände 11' des Aufbaus 10 und ist dort mit den Wänden 11' verbunden, so daß die an der hinteren Kante der Bodenplatte 2 auftretenden Kräfte durch das Querprofil 20 zu dessen seitlichen Enden und von dort in die seitlichen Wände 11' des Aufbaus 10 geleitet werden.

Wie die Figur 1 verdeutlicht, benötigt die hier dargestellte Konstruktion des Anhängers 1 an der Unterseite der Bodenplatte 2 keinerlei zusätzliche Aussteifungen oder Verstärkungsprofile im Schwenkbereich der Vorderräder, wie sie in Form von I-, C- oder Rechteck-Profilen etc. bei bisher bekannten Anhängern unter einem durchgehend in Leichtmetall ausgeführten Boden des Aufbaus üblich und erforderlich waren. Damit wird eine besonders tiefe Lage der Oberseite des Bodens 12 des Anhängers 1 über dem Fahrbahnniveau erreicht, was bei Ausnutzung der zulässigen Fahrzeughöhe einen besonders hohen Laderaum im Inneren des Aufbaus 10 ergibt. Gleichzeitig ist die Fahrstabilität des Anhängers 1 durch eine tiefe Schwerpunktlage sehr gut.

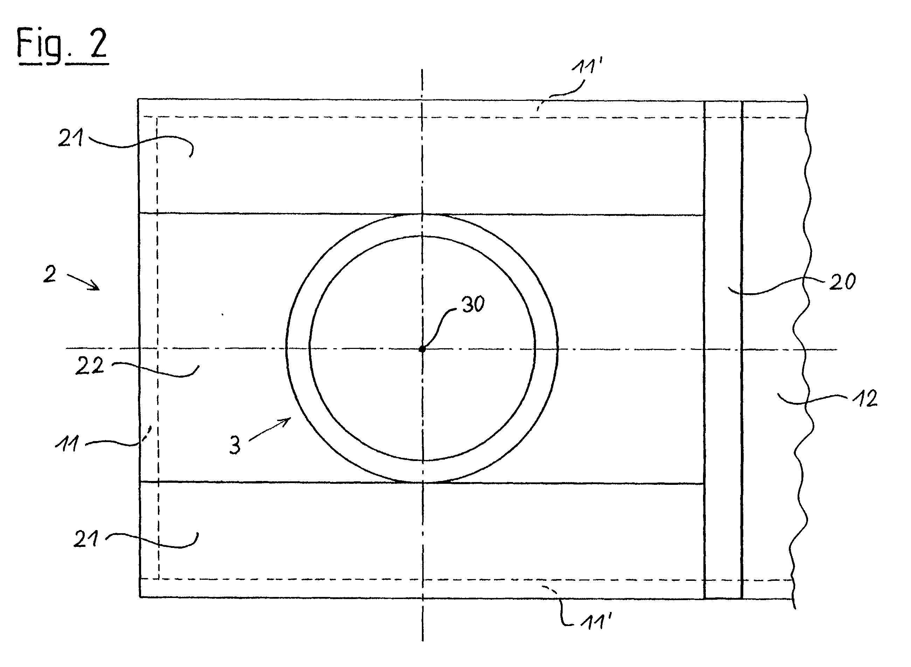

Figur 2 der Zeichnung zeigt in Unteransicht einen Blick auf eine erste Ausführung der Bodenplatte 2, an die sich nach rechts hin der übrige, nur zu einem kleinen Teil dargestellte Boden 12 des Anhängers anschließt. Im Zentrum der Bodenplatte 2 ist der Drehkranz 3 erkennbar, in dessen Mittelpunkt senkrecht zur Zeichnungsebene die Schwenkachse 30 verläuft, um die die hier nicht dargestellte Vorderachse des Anhängers verschwenkbar ist.

Die Bodenplatte 2 ist bei der hier dargestellten Ausführung mit drei unterschiedlichen Bereichen 21, 22 ausgeführt, wovon ein in Längsrichtung gesehen mittlerer Bereich 22 zweilagig ausgebildet ist. In diesem Bereich 22 besteht die Bodenplatte 2 aus zwei Lagen, die miteinander durch hier nicht sichtbare Rippen oder Stege verbunden sind; auch eine einstückige Ausführung als durchgehendes Profil ist denkbar. In zwei Bereichen 21 seitlich links und rechts, in der Zeichnung oben und unten, ist die Bodenplatte 2 nur einlagig und somit mit einer geringeren Gesamtdicke ausgeführt. Die Breite des zweilagigen Bereichs 22 ist dabei so groß wie der maximale Außendurchmesser des Drehkranzes 3; den übrigen Teil der Bodenplatte 2 nehmen die beiden äußeren Bereiche 21 ein, unter denen die hier nicht dargestellten Vorderräder 40 bei Geradeausfahrt oder geringem Lenkeinschlag laufen. Da hier die Materialstärke der Platte 2 geringer ist, besteht für die dort befindlichen Räder ein größerer Freiraum für Federungsbewegungen, so daß ein Aufsetzen der Bodenplatte 2 auf die Vorderräder 40 nicht auftritt.

Nach hinten, in der Zeichnung nach rechts, wird die Bodenplatte 2 durch das Querprofil 20 abgeschlossen. Auf der vom Betrachter abgewandten Seite der Bodenplatte 2 liegen die beiden seitlichen Wände 11' sowie die Vorderwand 11 des Aufbaus 10. Besonders deutlich wird hier, daß die Bodenplatte 2 sich an ihren seitlichen Kanten und an ihrer Vorderkante unmittelbar unter den Wänden 11, 11' des Aufbaus 10 befindet und daß sie an ihrer hinteren Kante durch das stabile Querprofil 20 unterstützt wird, das seinerseits mit seinen Stirnendbereichen unter den seitlichen Wänden 11' liegt.

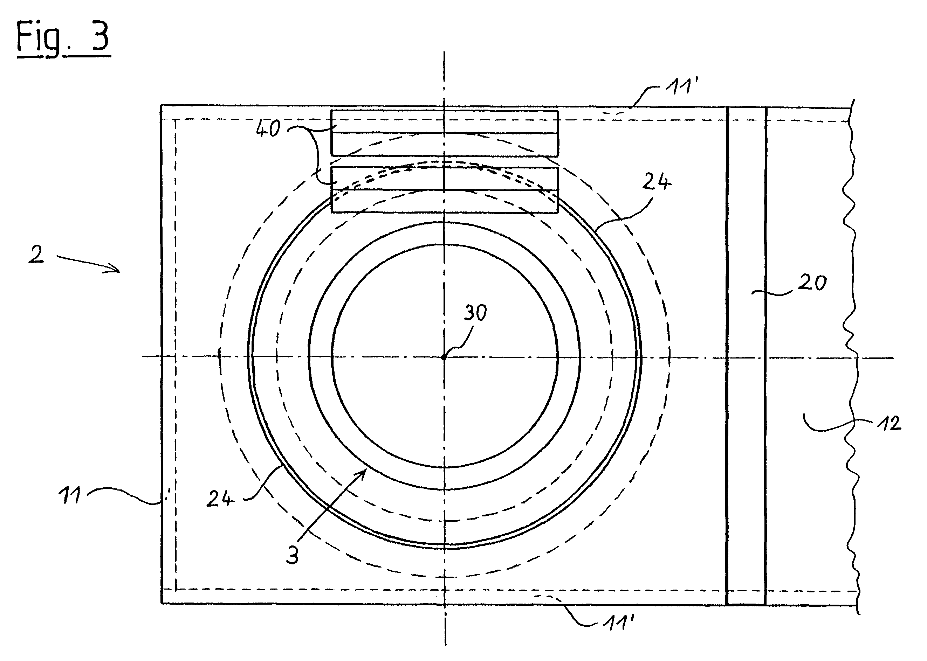

Eine zweite Ausführung der Bodenplatte 2 ist in Figur 3 in gleicher Darstellungsweise wie in Figur 2 gezeigt. Bei dem Beispiel gemäß Figur 3 ist die Bodenplatte 2 über ihre gesamte Fläche einlagig ausgeführt und trägt in ihrem Zentrum wieder den Drehkranz 3, dessen Mittelpunkt die Schwenkachse 30 bildet. Oben in Figur 3 sind zwei Vorderräder 40 als Zwillingsräder auf der einen Seite der Achse dargestellt, wobei die beiden Räder 40 einen gewissen Abstand voneinander aufweisen. Durch zwei gestrichelte Kreise sind die möglichen Positionen der Räder-Mittelpunkte bei Verschwenkung der Vorderachse 4 um die Schwenkachse 30 dargestellt. Konzentrisch zum Drehkranz 3 ist genau in dem Bereich zwischen den Zwillingsrädern 40 ein Verstärkungsring 24 vorgesehen, der an der Bodenplatte angebracht, z.B. angeschweißt, ist und der die Bodenplatte 2 aussteift und höher belastbar macht, ohne die Federungs- und Lenkbewegungen der Räder 40 einzuschränken. Auch hier liegt die Bodenplatte 2 mit ihren seitlichen Kanten und ihrer Vorderkante unter den seitlichen Wänden 11' und der vorderen Wand 11 des Aufbaus 10; ganz rechts in Figur 3 ist noch ein kleiner Teil des übrigen Bodens 12 des Aufbaus 10 erkennbar, der sich rechts von dem Querprofil 20 nach hinten erstreckt.

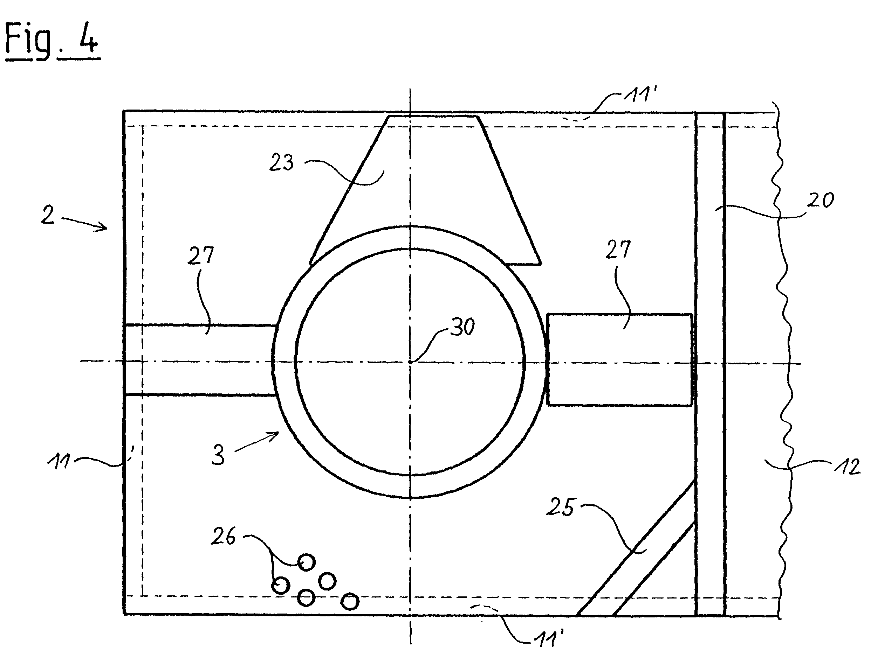

Figur 4 der Zeichnung schließlich zeigt eine Ausführung der Bodenplatte 2, bei der mehrere zusätzliche Ausgestaltungsmerkmale dargestellt sind, die einzeln oder in Kombination miteinander vorhanden sein können. Die Bodenplatte 2 ist hier in ihrer Grundform wieder rechteckig und einlagig ausgeführt und wird nach hinten, d.h. in der Zeichnung nach rechts, durch das Querprofil 20 abgeschlossen, hinter dem noch ein kleiner Teil des übrigen Bodens 12 des Aufbaus 10 erkennbar ist. Im Zentrum der Bodenplatte 2 liegt auch hier wieder der Drehkranz 3 mit der Schwenkachse 30 in dessen Mittelpunkt.

Seitlich des Drehkranzes 3, d.h. in der Zeichnung über diesem, ist beispielhaft in der Bodenplatte 2 ein trapezförmiger Ausschnitt 23 dargestellt, der in dem Bereich liegt, in dem die Vorderräder 40 des Anhängers 1 bei Geradeausfahrt und geringem Lenkeinschlag liegen. Dieser Ausschnitt erlaubt einen größeren Federungsweg der Vorderräder 40, ohne die statische und dynamische Belastbarkeit der Bodenplatte 2 unzulässig zu beeinträchtigen. In der praktischen Ausführung der Bodenplatte 2 ist selbstverständlich symmetrisch zu dem darstellten Ausschnitt 23 spiegelbildlich ein weiterer Ausschnitt auf der gegenüberliegenden Seite des Drehkranzes 3 vorgesehen.

In dem in der Figur 4 linken unteren Teil der Bodenplatte 2 sind beispielhaft mehrere Bohrungen 26 dargestellt, die eine gewichtsmindernde Lochung der Bodenplatte 2 bilden und die zweckmäßig in einer solchen Verteilung und Dichte angebracht sind, daß sie die Bodenplatte 2 nicht unzulässig schwächen, aber ihr Gewicht vermindern.

Als weiteres Beispiel eines zusätzlichen Merkmals ist in Figur 4 rechts unten an der Bodenplatte 2 ein in deren Eckbereich diagonal verlaufender Verstärkungsstreifen 25 dargestellt, der eine Aussteifung der Bodenplatte 2 bildet und dabei in einem Bereich angeordnet ist, wo er die Lenk- und Federungsbewegungen der Vorderräder 40 nicht behindern kann.

Schließlich zeigt die Figur 4 parallel zur Längsmittelachse der Grundplatte 2 verlaufend zwei Schutzhauben 27, die länglich-flach ausgebildet sind und deren Inneres einen Kanal zur Verlegung von Druckluftleitungen und Elektrokabeln und sonstigen Versorgungsleitungen etc. bildet, die zur Versorgung einer Bremsanlage und Beleuchtungsanlage und sonstiger Einrichtungen des Anhängers 1 benötigt werden. Die Schutzhauben 27 sind dabei so flach ausgeführt, daß die Vorderräder 40 bei einem großen Lenkeinschlag im Bereich von etwa 90° noch unter den Schutzhauben 27 hindurchpassen; ein Federungsweg wird bei einem derart großen Lenkeinschlag praktisch nicht benötigt, so daß ein relativ geringer Freigang zwischen Vorderrädern 40 und Schutzhauben 27 ausreicht. Bei Geradeausfahrt oder mäßiger Kurvenfahrt des Anhängers 1 liegen die Schutzhauben 27 in einem Bereich, in dem sich die Räder 40 nicht bewegen, so daß durch die Schutzhauben 27 der Federungsweg dann nicht eingeschränkt wird.

## Patentansprüche

1. Anhänger (1) mit einem aus einem Boden (12), vier Wänden (11, 11') und einem Dach (13) bestehenden, selbsttragenden Aufbau (10) aus Leichtmetall und mit zwei Achsen (4, 5) mit Rädern (40, 50), wobei die Vorderachse (4) eine Deichsel (41) aufweist und mittels eines unter dem vorderen Teil des Aufbaus (10) angeordneten Drehkranzes (3) lenkbar ist,
**dadurch gekennzeichnet,**
- **daß** der vordere Teil des Bodens (12) durch eine dünne tragende Bodenplatte (2) gebildet oder unterlegt ist, an deren Unterseite der obere Teil (32) des Drehkranzes (3) unmittelbar oder mittels einer Zwischenlage angebracht ist,
- **daß** die Bodenplatte (2) an ihrer Vorderkante mit der vorderen Wand (11) und an ihren zwei Seitenkanten mit dem vorderen Bereich der beiden Seitenwände (11') verbunden ist,
- **daß** die Bodenplatte (2) an ihrem hinter dem Bewegungsbereich der Vorderachse (4) und der daran gelagerten Räder (40) liegenden hinteren Bereich als Querträger (20) oder mit einem Querträger (20) ausgebildet ist,
- **daß** der Querträger (20) keine tragende Funktion für die Hinterachse (5) und/oder für den hinteren Bodenteil aufweist,
- **daß** der Querträger (20) mit seinen Enden mit den beiden Seitenwänden (11') verbunden ist und
- **daß** der Querträger (20) im wesentlichen nur nach unten über die Bodenplatte (2) vorragt.

2. Anhänger nach Anspruch 1, **dadurch gekennzeichnet, daß** die Bodenplatte (2) aus Stahl besteht.

3. Anhänger nach Anspruch 1 oder 2, **dadurch gekennzeichnet, daß** die Bodenplatte (2) eine einlagige Platte ist.

4. Anhänger nach Anspruch 1 oder 2, **dadurch gekennzeichnet, daß** die Bodenplatte (2) eine zumindest in einem Teilbereich (22) ihrer Flächenerstreckung mehrlagige Platte ist.

5. Anhänger nach Anspruch 4, **dadurch gekennzeichnet, daß** die Bodenplatte (2) in einem in Anhänger-Längsrichtung verlaufenden Mittelbereich (22) zweilagig aus einer Ober- und einer Unterplatte gebildet ist, die in geringem Abstand voneinander verlaufen und über Rippen oder Stege miteinander verbunden sind, daß die Breite des Mittelbereiches (22) kleiner als der innere freie Abstand der Vorderräder (40) ist und daß die Bodenplatte (2) in den Bereichen (21) beiderseits des Mittelbereiches (22) zweilagig mit kleinerer Gesamthöhe oder einlagig ist und oberseitig bündig mit der Oberseite des Mittelbereiches (22) ausgeführt ist.

6. Anhänger nach einem der vorangehenden Ansprüche, **dadurch gekennzeichnet, daß** die Bodenplatte (2) in den bei Geradeausfahrtstellung der Vorderachse (4) über den Vorderrädern (40) liegenden Bereichen jeweils mindestens einen Ausschnitt (23) oder jeweils mindestens einen Bereich mit unterseitig verminderter Plattenstärke aufweist.

7. Anhänger nach einem der vorangehenden Ansprüche, **dadurch gekennzeichnet, daß** die Bodenplatte (2) unterseitig in den von den Vorderrädern (40) bei deren Lenkbewegungen nicht überstrichenen Bereichen einen oder mehrere konzentrisch zum Drehkranz (3) angeordnete Verstärkungsringe (24) und/oder einen oder mehrere Verstärkungsstreifen und/oder -profile (25) aufweist.

8. Anhänger nach einem der vorangehenden Ansprüche, **dadurch gekennzeichnet, daß** die Bodenplatte (2) in ihren statisch geringer belasteten Flächenbereichen mit gewichtsmindernden Ausschnitten und/oder Lochungen (26) versehen ist.

9. Anhänger nach einem der vorangehenden Ansprüche, **dadurch gekennzeichnet, daß** die Bodenplatte (2) unterseitig entlang ihrer Längsmittelachse vor und/oder hinter dem Drehkranz (3) mit (je) einer einen Kanal für Elektro- und Druckluftleitungen und sonstige Versorgungsleitungen bildenden länglich-flachen Schutzhaube (27) ausgestattet ist.

10. Anhänger nach einem der vorangehenden Ansprüche, **dadurch gekennzeichnet, daß** die Bodenplatte (2) oberseitig auf ihrem im Inneren des Aufbaus (10) liegenden Flächenbereich mit einer dem Verwendungszweck des Anhängers entsprechenden, z.B. rutschhemmenden oder glatten, Oberfläche versehen oder ausgeführt ist.

11. Anhänger nach Anspruch 10, **dadurch gekennzeichnet, daß** die Oberfläche durch ein auf der Oberseite der Bodenplatte (2) angebrachtes Blech mit einer entsprechend ausgeführten Oberseite gebildet ist.

## Claims

1. Trailer (1) with a self-supporting superstructure (10) made of light metal, said superstructure consisting of a floor (12), four walls (11, 11'), and a roof (13), and with two axles (4, 5) with wheels (40, 50), wherein the front axle (4) is provided with a draw-bar (41) and can be steered by means of a rim bearing (3) that is arranged underneath the front part of the superstructure (10),
**characterised in that**
- a thin load-bearing floor plate (2), the lower side of which is attached to the upper part (32) of rim bearing (3) either directly or by means of an intermediate layer, comprises or is placed under the front part of the floor (12),
- the front edge of the floor plate (2) is connected to the front wall (11) and the two side edges of the floor plate (2) are connected to the front area of the two side walls (11'),
- the rear part of the floor plate (2), which is located behind the area of motion of the front axle (4) and wheels (40) supported therein, is provided as a transverse girder (20) or with transverse girder (20),
- the transverse girder (20) does not serve the function of supporting the rear axle (5) and/or the rear part of the floor,
- the ends of the transverse girder (20) are connected to the two side walls (11'),
- the transverse girder (20) protrudes beyond the floor plate (2) essentially only in a downward direction.

2. Trailer according to Claim 1, **characterised in that** the floor plate (2) is made of steel.

3. Trailer according to Claim 1 or 2, **characterised in that** the floor plate (2) is provided as a single-layer plate.

4. Trailer according to Claim 1 or 2, **characterised in that** the floor plate (2) is provided as a multi-layer plate at least over a portion (22) of its surface extension.

5. Trailer according to Claim 4, **characterised in that** a middle portion (22) of floor plate (2) extending parallel to the longitudinal axis of the trailer is provided as two layers, e.g. an upper and a lower plate, said plates being arranged at a short distance from each other and being connected by ribs or bridges, by the width of the middle portion (22) being less than the inner clearance between the front wheels (40), and by the floor plate (2), in the areas (21) on both sides of the middle portion (22), being provided as two layers with a lesser total height or as a single layer and its upper side being. provided to be flush with the upper side of the middle portion (22).

6. Trailer according to anyone of the preceding claims, **characterised in that** the floor plate (2), in the areas residing above the front wheels (40) when the front axle is in position for straightforward travel, is provided with at least one notch (23) each or at least one area each in which the plate is thinner on its underside.

7. Trailer according to anyone of the preceding claims, **characterised in that** the floor plate (2), in the areas of its underside that are outside the space the wheels contact during their steering movements, is provided with one or several reinforcing rings (24) in a concentric arrangement with respect to rim bearing (3), and/or one or several reinforcing strips and/or profiles (25).

8. Trailer according to anyone of the preceding claims, **characterised in that** the floor plate (2), in areas bearing a lesser static load, is provided with weight-reducing notches and/or perforations (26).

9. Trailer according to anyone of the preceding claims, **characterised in that** the floor plate (2), at its underside and along its central longitudinal axis, is provided with one elongated-flat protective cover (27) each before and/or after the rim bearing (3), said cover forming a conduit for power and pressurised air lines and other supply lines.

10. Trailer according to anyone of the preceding claims, **characterised in that** the floor plate (2), at the upper side of the part of its surface that resides inside the superstructure (10), is provided with or designed to have a surface that is suited for the intended purpose of the trailer, e.g. as a slip-resistant or smooth surface.

11. Trailer according to Claim 10, **characterised in that** the surface is provided by a piece of sheet metal attached to the upper side of the floor plate (2), said sheet metal being provided with a suitable upper surface.

## Revendications

1. Remorque (1) avec une construction autoporteuse (10) en métal léger se composant d'un fond (12), de quatre parois (11, 11') et d'un toit (13), ainsi qu'avec deux essieux (4, 5) à roues (40, 50), étant donné que l'essieu avant (4) comporte un timon (41) et peut être guidé au moyen d'une couronne d'orientation (3) agencée sur la partie avant de la construction (10),
**caractérisée par le fait que**
- la partie avant du fond (12) est'constituée par une mince plaque de fond (2) porteuse ou que cette dernière est placée en dessous, plaque sur le côté inférieur de laquelle la partie supérieure (32) de la couronne d'orientation (3) est installée directement ou au moyen d'une pièce d'écartement,
- que la plaque de fond (2) est reliée sur son arête avant à la paroi avant (11) et sur ses deux arêtes latérales à la partie avant de deux parois latérales (11'),
- que la plaque de fond (2) est constituée sur sa partie inférieure se trouvant derrière la zone de mouvement de l'essieu avant (4) et des roues (40) logées sur ce dernier comme traverse (20) ou comporte une traverse (20),
- que la traverse (20) n'assume aucune fonction porteuse pour l'essieu arrière (5) et/ou pour la partie arrière du fond,
- que la traverse (20) est reliée à ses extrémités aux deux parois latérales (11'), et
- que la traverse (20) ne déborde principalement que vers le bas de la plaque de fond (2).

2. Remorque conformément à la revendication 1, **caractérisée par le fait que** la plaque de fond (2) est en acier.

3. Remorque conformément à la revendication 1 ou 2, **caractérisée par le fait que** la plaque de fond (2) est une plaque à couche unique.

4. Remorque conformément à la revendication 1 ou 2, **caractérisée par le fait que** la plaque de fond (2) est une plaque comportant plusieurs couches au moins dans une partie (22) de sa surface.

5. Remorque conformément à la revendication 4, **caractérisée par le fait que** la plaque de fond (2) se compose dans une zone centrale (22) située dans le sens longitudinal de la remorque de deux couches, à savoir une plaque supérieure et une plaque inférieure qui sont très peu éloignées l'une de l'autre et sont reliées l'une avec l'autre par des nervures ou listons, que la largeur de la zone centrale (22) est inférieure à l'écartement libre intérieur des roues avant (40) et, que la plaque de fond (2) comporte des deux côtés de la zone centrale (22) deux couches de hauteur globale relativement petite ou une seule couche et est alignée sur le côté supérieur sur le côté supérieur de la zone centrale (22).

6. Remorque conformément à l'une des revendications précédentes, **caractérisée par le fait que** la plaque de fond (2) présente dans les zones se trouvant au-dessus des roues avant (4) lorsque l'essieu avant (4) est en position de marche en ligne droite chaque fois au moins une section (23) ou chaque fois au moins une zone d'épaisseur de plaque réduite sur le côté inférieur.

7. Remorque conformément à l'une des revendications précédentes, **caractérisée par le fait que** la plaque de fond (2) comporte sur son côté inférieur dans les zones non balayées par les roues avant (40) lors de leurs mouvements de braquage une ou plusieurs anneaux de renforcement (24) concentriques à la couronne d'orientation (3) et/ou un ou plusieurs bandes et/ou profilés (25) de renforcement.

8. Remorque conformément à l'une des revendications précédentes, **caractérisée par le fait que** la plaque de fond (2) comporte sur ses parties de surface à charge statique inférieure des sections et/ou perforations (26) destinées à en réduire.le poids.

9. Remorque conformément à l'une des revendications précédentes, **caractérisée par le fait que** la plaque de fond (2) comporte sur le côté inférieur, le long de'son axe longitudinal, en amont et/ou en aval de la couronne d'orientation (3) (chaque fois) un capot de protection (27) plat longitudinal constituant un canal pour conduites électriques et pneumatiques et autres conduites d'alimentation.

10. Remorque conformément à l'une des revendications précédentes, **caractérisée par le fait que** la plaque de fond (2) comporte sur le côté supérieur, sur sa zone de surface se trouvant à l'intérieur de la construction (10) une surface correspondant à l'application de la remorque, par exemple une surface antiglissante ou lisse, ou est recouverte d'une telle surface.

11. Remorque conformément à la revendication 10, **caractérisée par le fait que** la surface est constituée par une tôle, dont la surface supérieure est appropriée, installée sur le côté supérieur de la plaque de fond (2).
